Europäisches Patentamt

European Patent Office

Office européen des brevets

(19)

(11) EP 0 228 648 B1

(12) EUROPEAN PATENT SPECIFICATION

(45) Date of publication and mention
of the grant of the patent:
**15.04.1998 Bulletin 1998/16**

(51) Int Cl.6: **H05G 1/36**, H05G 1/46,
H04N 5/32, G01N 23/04

(21) Application number: 86117536.2

(22) Date of filing: **17.12.1986**

(54) **Automatic X-ray image brightness controll**

Automatische Helligkeitssteuerung für Röntgenbilder

Contrôle automatique de la brillance d'une image à rayons X

(84) Designated Contracting States:
**CH DE ES FR GB IT LI NL**

(30) Priority: **30.12.1985 US 814902**

(43) Date of publication of application:
**15.07.1987 Bulletin 1987/29**

(73) Proprietor: **GENERAL ELECTRIC COMPANY**
**Schenectady New York 12305 (US)**

(72) Inventors:
• **Meccariello, Thomas Vincent**
**Waukesha Wisconsin 53188 (US)**
• **Relihan, Gary Francis**
**Nashotah Wisconsin 53058 (US)**

(74) Representative: **Goode, Ian Roy et al**
**London Patent Operation**
**General Electric International, Inc.,**
**Essex House,**
**12-13 Essex Street**
**London WC2R 3AA (GB)**

(56) References cited:
**EP-A- 0 063 644**        **EP-A- 0 142 761**
**EP-A- 0 200 272**        **US-A- 4 573 183**
**US-A- 4 590 603**

## Description

<u>Background of the Invention.</u>

This invention pertains to an apparatus for controlling the brightness of x-ray images during fluoroscopy and during cinerecording.

The automatic brightness control (ABC) subsystem is that part of a diagnostic x-ray control system which keeps the light of the output image from an x-ray image intensifier constant during fluoroscopy to compensate for variations in attenuation due to scanning over different thicknesses and densities of the body and for variations in system geometry. The output image is viewed by a video camera and displayed on a television monitor. Usually, the x-ray system is equipped for recording images with cine and photospot cameras and on various magnetic recording media.

In the fluoroscopic mode, x-ray exposures are usually continuous and of long duration so x-ray tube current and, hence, x-ray photon output and dose rate are relatively low. Government regulations require that during fluoroscopy dose rate shall not exceed 10 Roentgens per minute (10R/min) at the plane where the x-ray beam enters the patient.

Automatic brightness control systems commonly have two control loops. One loop responds to brightness variation by automatically adjusting x-ray tube anode-to-cathode milliamperage (mA) and kilovoltage applied to the anode of the tube in an attempt to keep the brightness of the image intensifier output phosphor constant. The other loop provides for adjusting the gain of the video camera in response to brightness. One problem with two control loop systems acting independently is that when the x-ray beam attenuation varies as it scans over the body, or any opaque x-ray material in the bloodstream flows into the field of view or the x-ray tube focal spot-to-image distance (SID) changes, both controls try to correct brightness. This inevitably results in overshoot by one or the other loops so one has to oscillate back to the control level of the other. Thus, with prior art ABC systems there can be noticeable blooming, darkening, brightening and flickering of the displayed image during x-ray beam attenuation changes and imaging system geometry changes.

The matter of keeping output image brightness constant is complicated by the interaction of selected x-ray tube exposure factors. X-ray tube anode-to-cathode mA depends mainly on the cathode or filament temperature while a constant kilovoltage (kV) is applied to the x-ray tube anode. At lower kilovoltage such as around 60 kV electron emission from the cathode is limited largely by space charge about the cathode. As applied kV is increased, as is necessary to penetrate more dense or thicker areas in a patient, the space charge effect is reduced and there is a non-linear relation between kV and x-ray intensity or x-ray photon output from the tube. Image brightness is directly proportional to x-ray tube mA and not directly proportional to applied kV. Brightness also varies as the square of the distance between the x-ray tube focal spot and the image plane.

Within an applied kV allowable range of 60 kV to 120 kV, x-ray tube mA is the preferred parameter to regulate for maintaining constant intensifier output image brightness during fluoroscopy since brightness is directly proportional to mA. X-ray tube photon output is directly proportional to mA. Image contrast increases with increasing tube mA and concurrent output photon intensity so that maximum information is obtainable from suitably high contrast images. There are, however, limits on the level of mA affected by the fact that the patient entrance dose rate must always be kept at or below 10R/min. For fluoroscoping thick highly attenuating regions of the body, kV must be increased and mA decreased to maintain 10R/min. Unfortunately, as kV and penetrating power of the x-ray photons increases, contrast in the image decreases. Thus, small differences in tissue density are less likely to be perceived.

Generally, prior practice has been to detect the need for more brightness and use a servo loop to automatically increase mA up to its available limit in an attempt to achieve the necessary brightness increase. In some system designs, kV is increased manually or automatically if the desired brightness level is not achievable with current control. If proper brightness cannot be obtained within the tube current, kV, SID and 10R/min. constraints, the gain of the video camera is increased. Increasing video camera gain is the least desirable way of increasing brightness because noise is amplified as much as picture information, but no gain in information results because it is limited already by the limit on x-ray photon input to the patient's body. Prior art brightness control systems, adjusting mA, kV and video gain are essentially step functions which result in a lack of smooth unnoticeable transition from one function to another and, hence, cause noticeable flickering and increasing and decreasing brightness as X-ray attenuation and system geometry change during fluoroscopy.

According to the invention, there is provided a fluoroscopic system comprising an X-ray tube having an anode and a cathode, means for adjusting the average current flowing between the anode and cathode of the tube during an X-ray exposure sequence, means for controlling the kilovoltage applied to the anode of the tube, an image intensifier operative to convert an X-ray image produced by an X-ray beam from the tube to an optical image, a video camera for converting said optical image to analog video signals; means for adjusting the gain of said video camera, a video monitor for translating said analog video signals to a visible image, and a device for controlling image brightness, said device comprising: means for sampling the brightness of the image during successive periods and for producing a brightness signal representative of brightness during a current sampling period; means for producing a constant reference brightness signal; a primary control loop including means for taking the ratio of said reference brightness signal (A) to said brightness signal (B) hereinafter called brightness ratio signal such that a ratio other than 1 indicates an error between the brightness signal and the reference brightness signal, said primary loop including; means for storing a command signal hereinafter called rad control last signal corresponding to the level to which the X-ray tube average current was commanded to be at by a rad control signal during the brightness sampling period preceding the current sampling period, hereinafter called the preceding sampling period, and means for multiplying the brightness ratio signal of the current sampling period by the rad control last signal to produce a new rad control signal corresponding to a command signal to which said average current adjusting means responds to cause said brightness ratio signal to substantially equal 1; means for subtracting said rad control last signal from said new rad control signal to produce a difference signal for producing said rad control signal for commanding said means for adjusting the X-ray tube current average to change the average current flowing between the anode and cathode of the tube; a loop hereinafter called kV loop for determining the proportion of the brightness error that needs to be corrected by adjusting the kilovoltage applied to the X-ray tube anode, said kV loop including: means for taking the ratio of said rad control last signal and a dialled rad control signal corresponding to a predetermined conduction interval for the X-ray tube during each brightness sampling period and, hence, to the desired average X-ray tube current, the signal resulting from taking the ratio of the rad control last and dialled rad control signals being hereinafter designated the rad control ratio signal; means for multiplying said rad control ratio signal and said brightness ratio signal for producing a kV control ratio signal corresponding to how much kV adjustment is required to correct brightness if said primary loop predicted rod control signal equals a value different than the dialled rad control signal which corresponds to the brightness error that would result if the rad control signal were forced to be equal to the dialled rad control signal; means for storing a command signal hereinafter called kV control last corresponding to the level to which the X-ray tube kV was commanded to be at by a kV control signal during the preceding sampling period; means for converting said kV control last signal to a brightness factor last signal representing a normalised brightness of 1 corresponding to the minimum tube kilovoltage available; means for multiplying said brightness factor last signal and said kV control ratio signal to produce a new brightness factor signal (89) and then converting said new brightness factor signal to a new kV control signal, and means for subtracting said kV control last signal from said new kV control signal to produce a difference signal for producing said kV control signal for commanding said means for controlling the X-ray tube anode voltage to change the kilovoltage applied to the anode of the tube.

The invention disclosed herein seeks to provide a new method and apparatus for controlling and maintaining x-ray image brightness constant during fluoroscopic and cine recording procedures.

The invention further seeks to provide for adjusting x-ray tube mA, kV and video gain on a priority basis in the stated order, but in a sense, concurrently with each other such that the primary effect on brightness is obtained most desirably with mA control, the secondary effect with kV control and a tertiary effect with the least desirable video gain control and in keeping patient entrance x-ray does rate at no greater than 10R/min. The invention still further seeks to eliminate all noticeable brightness changes even through there is a sudden fluoroscopic scan from more to less dense regions of the body or vice versa and even if there is a sudden change in the SID.

The invention also seeks to provide a brightness control system that allows mA control to be obtained in two ways; which are, allowing x-ray tube mA level to be obtained primarily by adjusting the level of current that is heating the filament in systems adapted exclusively for fluoroscopy and allowed tube mA level to be obtained by using a grid controlled x-ray tube and controlling the x-ray pulse duration during each frame as marked off by each video vertical blanking pulse systems that do fluoroscopy and cinerecording.

To these ends brightness control is accomplished, using software or hardware, by having the effect of two servo loops. One primary radiation control loop, called the RAD CONTROL loop, gives priority to adjusting the current (mA) flowing through the x-ray tube. This loop is based on taking the ratio of a reference voltage signal with respect to a voltage signal corresponding to present image brightness. In the described embodiment, if the brightness (BRT RATIO) is greater than 1, the image brightness is too low, if less than 1, brightness is too high and if equal to 1, brightness is correct. The ratio signal is processed and used to control the x-ray tube mA. To make the required mA change which appears to call for may exceed the available tube mA limits. Some brightness error may have to be overcome by changing the kV applied to the x-ray tube.

In a second loop, called the kV loop, a ratio is taken between a signal corresponding to a desired x-ray tube mA level or mA pulse width and the mA or RAD CONTROL value commanded by the above mentioned primary loop during the next preceding brightness sample period. This ratio indicates the error between the mA desired and the mA commanded by adjusting mA alone. The resulting RAD CONTROL ratio (RCR) is then multiplied by the BRT RATIO to produce a kV CONTROL RATIO. This ratio reflects the fact that if the brightness error which RAD CONTROL is required to correct by mA adjustment is large or small, then the proportion of the brightness to be corrected by kV adjustment is correspondingly larger or smaller.

An optional third loop is operative to alter the video camera gain to a degree governed by how much of the available mA range and of the available kV range are used up. In other words, the RAD CONTROL command and the kV command magnitudes constitute a prediction as to whether and how much video camera gain adjustment is necessary when kV and mA are so far along toward reaching their limits. In the video gain control loop, a ratio is taken of the RAD CONTROL value at the last command for the preceding sampling period in respect to the maximum RAD CONTROL LIMIT. A ratio is taken of the brightness change resulting from the kV control command signal at the preceding sampling period in respect to the maximum brightness factor limit. The results of these ratios are multiplied with the BRT RATIO and the result is the VG CONTROL command. This process results in increasing the video gain control (VG CONTROL) by a minimum amount, if any, to minimize noise amplification.

The system is adaptable to adding additional loops which produce commands that are functions of preceding loops and which are all based on sensing a single condition, namely, image brightness.

The manner in which the foregoing brightness control functions are achieved will be evident in the ensuing description of an embodiment of the invention in which reference will be made to the accompanying drawings.

## Description of the Drawings

FIGURE 1 is a block diagram of a diagnostic x-ray system in which the new automatic brightness controller is installed;

FIGURE 2 is a diagram showing the parts of the predictor processor shown in block form in FIGURE 1;

FIGURE 3 is a graph showing the relationship between kV applied to the x-ray tube anode and image brightness factor (BRT FACTOR) which is useful to explain operation of the invention;

FIGURE 4 is a diagram of the electronic components involved in varying the gain of the video camera in the system as a third priority function for controlling image brightness; and

FIGURE 5 is a group related timing diagrams for showing how the video electronic gain circuit and the electronics controlling the aperture of the video camera respond to a gain change command.

## Description of a Preferred Embodiment

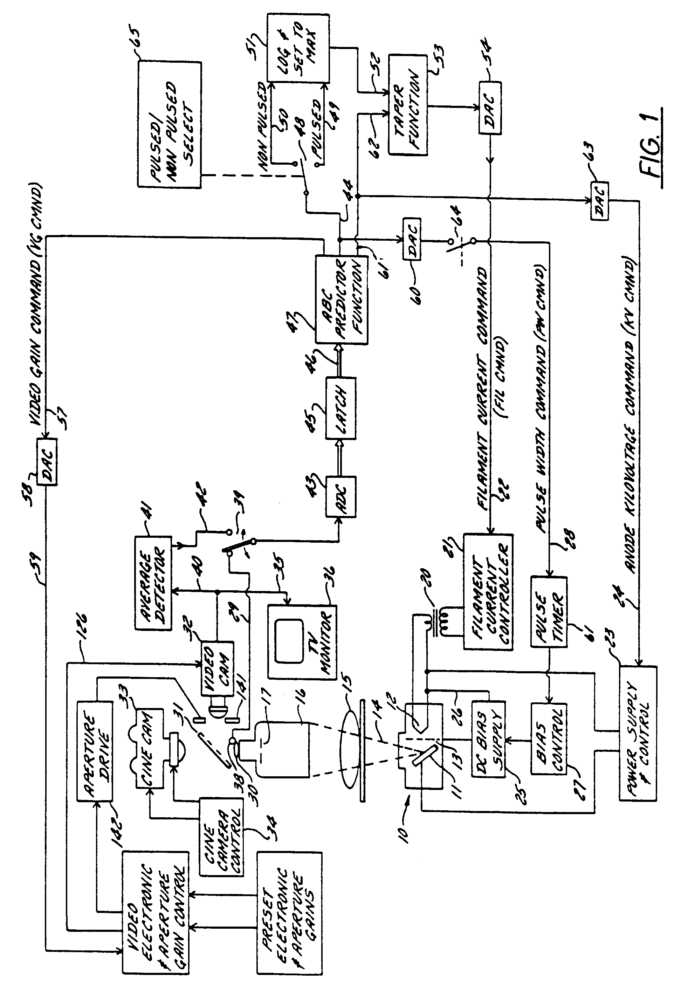

FIGURE 1 is a functional block diagram of an x-ray cinerecording and fluoroscopy system in which the new automatic image brightness system is used.

Basically, conventional equipment is used to acquire x-ray images. Thus, there is an x-ray tube 10 having an anode target 11, a cathode filament 12 and a control grid 13 so as to be capable of functioning as a vacuum tube triode. From the electron beam focal spot on target 11, an x-ray beam 14 is projected through a patient represented by the ellipse marked 15. The resulting x-ray image is received in an image intensifier 16 and converted to a bright minified optical image appearing on the output phosphor 17 of image intensifier 16. The electron emissive x-ray tube filament 12 is heated by current supplied from the secondary winding of a filament transformer 20. A filament current controller or regulator 21 responds to the magnitude of filament current level command signals (FIL CMND), generated in accordance with the invention, that are input on line 22. One of many suitable filament current controls is described in US Patent No. 4590603. The X-ray tube current, expressed in milliamperes (mA), flowing between the anode 11 and cathode filament 12 when kilovoltage is applied to the anode is dependent in part on the current flowing through filament 12 and on its corresponding temperature.

A peak kilovoltage (kV) applied between anode 11 and filament 12 to initiate an x-ray exposure is derived from the secondary winding of a step-up transformer, not shown, in an x-ray tube power supply and control system symbolized by the block marked 23. A basically conventional x-ray power supply may be used. Although the parts are not shown, it will be understood, by those knowledgable in x-ray systems, to comprise a single phase, but more commonly a 3-phase step-up transformer whose high kilovoltage secondary winding output is rectified and applied between the anode 11 and filament 12 of x-ray tube 10. The primary winding of the step-up transformer is supplied from a variable auto transformer in power supply block 23 such as one that is known by the trademark Volt-Pac and is marketed by General Electric Company.

As a practical matter, neither single phase nor 3-phase auto transformers are infinitely variable but apply voltage in steps to the primary of the step-up transformer between minimum and maximum permissible voltage limits. By way of example, in the embodiment of the invention described herein, the voltage steps supplied by the auto transformer to the primary of the 3-phase step-up transformer may be such that the kV applied to the x-ray tube anode will change in no less than one kV steps. It will be understood that kV as used herein implies peak kV (kVp) since it is the peak voltage or peak of the rectified voltage ripples that govern the peak energies of the x-ray photons emitted from the electron beam focal spot on the target 11 of x-ray tube 10.

It should be understood that the x-ray power supply and control 23 is conventional in the respect that it contains the switching devices for causing the kV to be applied to the anode of the x-ray tube and to be isolated from the anode start and stop x-ray exposures, respectively, for continuous fluoroscopy or for pulsing the x-ray tube on and off for intervals within each video frame time as is required for cinerecording but is also applicable to fluoroscopy according to the present invention. A known type of servo system, not shown in the power supply and control block 23, can be used for varying the variable auto transformer output voltage. The servo system is, however, governed by an analog command signal (kV CMND) delivered over line 24 in FIGURE 1. Adjusting kV is, of course, a common practice, but it is the degree to which the kV is varied and the manner in which it is varied relative to other system parameters to achieve automatic image brightness control that is one of the new features achieved with the present invention.

The invention uses two different methods of varying the x-ray tube mA besides varying other x-ray tube factors for achieving the brightness control function. For cinerecording, it is necessary to vary brightness by pulsing x-ray tube on and off in response to alternate applications of zero voltage and a high negative bias voltage to the control grid 13 of the x-ray tube within each consecutive video frame time so brightness will be varied in part by the average mA through the x-ray tube. Increasing pulse width, for example, increases the average mA through the x-ray tube.

X-ray tube 10 has the capability for being biased to cutoff. A dc bias voltage supply s represented by the block marked 25. The negative output voltage terminal of the bias supply connects to x-ray tube control grid 13. The positive side of the supply connects by way of a line 26 to the filament. Dc bias supplies for making the x-ray tube conductive and non-conductive, thereby producing x-ray pulses, are well-known in the art and need not be described in detail. It is sufficient to say that the bias supply contains the usual step-up transformer and rectifiers for producing a bias voltage on the order of minus 3000 volts relative to the x-ray tube filament. When the negative bias voltage is applied to the grid, conduction by the x-ray tube is inhibited. Producing x-ray pulses of short duration and at a high frequency is necessary for performing cinerecording. Cinecamera frame rates may go as high as 140 frames per second in a case such as where the radiologist attempts to obtain an unblurred picture of a moving heart. Average current (mA) through the x-ray tube is controlled by regulating the widths of the x-ray pulses when operating in the cinerecording mode. Brightness must be adjusted very rapidly during cinerecording. The bias voltage source 25 is turned on and off by a bias control circuit which is represented by the block marked 27. The bias control circuitry 27 turns the bias supply 25 on and off at a rate and for pulse width durations governed by a pulse width command signal provided over a line 28.

Varying pulse width instead of filament current level can also be used in the fluorographic mode, according to the invention, besides being used for cinerecording. In systems that are equipped for cinerecording, brightness is governed by pulse width control for both cinerecording and fluorography.

A bias supply that could be used is described in Daniels, et al, U.S. Patent No. 4,361,901, which is owned by the assignee of the present application.

The image on the image intensifier 16 output phosphor 17 is projected by way of an objective lens 30 to a dichroic mirror 31 which can direct the image into a video camera 32 or a cinecamera 33. The cinecamera control is symbolized by the block marked 34 and the video camera control is assumed to be within the video camera. When the video camera 32 is functioning as it is during a fluoroscopic scan of the patient, the video signals from the camera are conducted by way of a cable 35 to a television monitor 36 on whose screen the image is continuously displayed. Two means for providing a signal indicative of the brightness of the x-ray image are provided. One is a photosensor 38 which is in a position to view the image intensifier output phosphor 17. Photosensor 38 is preferably activated when the system is in the cinerecording mode. It will be shown later how the photosensor is instrumental in maintaining the brightness of the image on phosphor 17 constant during recording with cinecamera 33. A signal indicative of the brightness of the phosphor is selectable by means of a switch 39, which when swung to the left as depicted in FIGURE 1, supplies the analog signal sample indicative of brightness during the present brightness sampling frame or period to an analog-to-digital converter (ADC) 43.

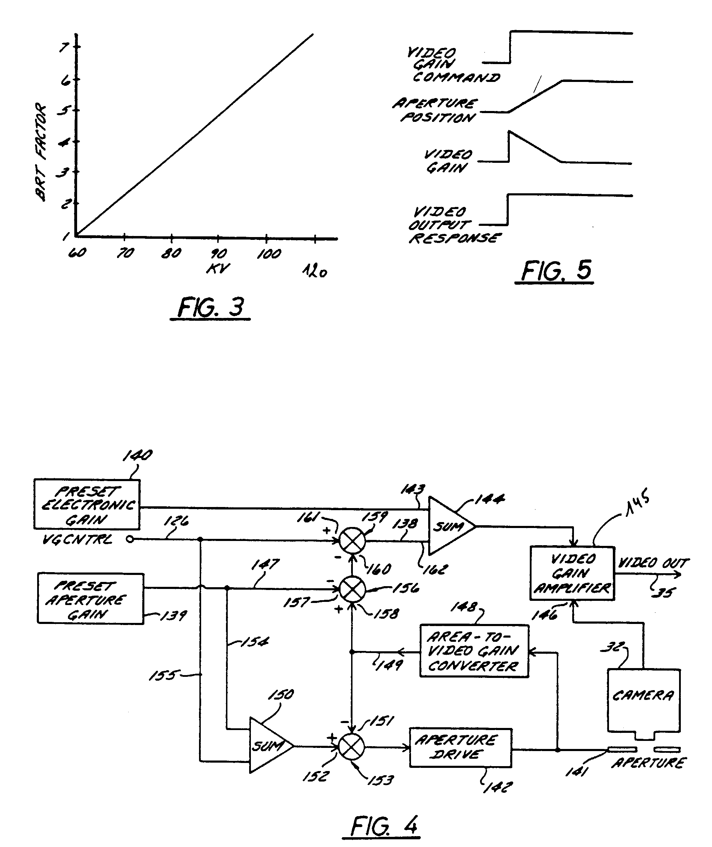

An alternative signal representative of brightness is derived from the video camera 32. The video output signal from the camera is conducted by way of cable 40 to an average detector 41 which can be built into the camera housing. Detector 41 produces a signal indicative of the average brightness over the area of the video picture. The average detector is described in detail and shown in FIGURE 3 of US Patent No. 4573183. This signal is supplied by way of line 42 to switch 39 for being converted to a digital value in ADC 43 when the proper position of switch 39 is selected. By way of example and not limitation, the signal indicative of the brightness that the video camera detects is in the range of zero to one volt.

What has been described thus far is mostly conventional.

An important feature of the invention is that the x-ray tube mA, the kV applied to the x-ray tube anode and the gain of the video camera are all controlled and regulated by operating on a single sensed signal such as the brightness sample signal derived from photosensitive device 38 or video image average brightness derived from detector 41. After digitization in ADC 43, these samples which are taken at a synchronous rate are latched temporarily in a digital latch 45 from which they are transmitted by way of a bus 46 to a block 47 that is identified as an ABC (Automatic Brightness Control) predictor function. The structure and operations performed in this functional block will be described in great detail later. For the time being, it is sufficient to recognize that a digital signal, later called RAD CONTROL signal, indicative of the level to which the x-ray tube filament current must be adjusted or pulse width must be adjusted to maintain brightness constant is delivered on line 44 from ABC predictor 47 to a switch 48 which is a multiplexer in an actual embodiment and to a digital-to-analog converter (DAC) 60. The switch can connect the x-ray tube current controlling output signal from predictor 47 to either line 49 for operating in the pulsed x-ray tube current mode as for cinerecording and fluoroscopy or to line 50 for operating in the non-pulsed mode as is the case when the apparatus is limited to fluoroscopy. Switch 48 is operated with a selector 65 which also operates switch 64. Lines 49 and 50 are inputs to a block 51 labeled Log & Set to Max in which some signal processing is done as will be explained later in connection with describing the taper function which is performed in the block labeled 53. The taper function has an input line 52. The taper function assures that the x-ray dose on the entrance side of the patient does not exceed 10R/min. Exceeding this dose rate during cinerecording is permissible. The output from the taper function circuitry is input to a DAC 54 whose output is a filament current command analog signal which is supplied by way of line 22 to filament current controller 21. The RAD CONTROL signal on predictor output line 44 is basically an x-ray tube current (mA) controlling signal. The RAD CONTROL signal is input to a DAC 60 which outputs an analog signal on line 28. This signal controls a pulse width timer 61 which regulates the x-ray tube bias voltage control 27. The predictor output signal (kV CMND) that is for dynamic adjustment of x-ray tube anode kV appears on line 62 and is one input to the taper function circuitry 53 where it is needed for maintaining patient x-ray entrance dose below 10R/min. The command for controlling x-ray tube anode kV is converted to an analog signal 39 DAC 63 before it is sent to the x-ray tube power supply control 23. A switch 64 is opened when operating in the non-pulsed mode since x-ray tube mA is then governed by the FIL CMND signal on line 22. Switch 64 is operated with selector 65 in the upper right region of FIGURE 1.

A significant feature of the system is that it is not simply x-ray tube mA that is adjusted when brightness should be reduced or increased. Let us say that the image intensifier was scanned over a patient from a low density to a high density and x-ray attenuating area. In such case, a large mA step or increase would seem to be required to bring brightness up to where it ought to be. This is what is done in prior art systems. It results in flickering and might not even be sufficient to get the proper brightness unless kV is increased independently. In accordance with the invention, the predictor upon sensing that the current adjustment apparently required would be so great so as to fall outside the high permissible limit, for instance, would cause a kV adjustment to be made. In other words, it would predict or anticipate that under instantaneous circumstances, kV adjustment will be necessary so it starts making it within a frame time concurrently with the generated filament current command. The predictor preferentially adjusts x-ray tube mA which desirably should be as high as possible to produce a maximum number of x-ray photons to thereby get the best image contrast without exceeding permissible filament current limits and without violating the proscription against having the patient entrance dose rate exceed 10R per minute. In the fluoroscopic mode, as indicated earlier, the single signal detected for obtaining brightness control is a sample obtained from video signal average detector 41. In situations where a great increase in brightness is required because a very dense portion of the patient's body is being scanned, it is desirable to make, within limits, the x-ray tube mA adjustment and some kV adjustment before increasing video camera gain. kV should be raised no more than is necessary because as it is increased, image contrast suffers. However, if it is predicted that increasing mA and kV will not result in a constant image brightness as displayed on the TV monitor during fluoroscopy, the video camera gain must be adjusted. Increasing video camera gain is least desirable because, it does not result in producing any more information in the image and, furthermore, it does result in amplifying the noise which is undesirable. However, the fluoroscopist wants an image that is at a constant brightness level and exhibits no noticeable changes in brightness as the x-ray image intensifier 16 is moved from over one portion of the patient's anatomy to another.

From the single sample brightness signal that is obtained from average detector 41, predictor 47 not only provides the proper command signals for adjusting x-ray tube mA and kV but also anticipates the video camera gain that might be required and provides an output signal which is a command to the video camera 32 to adjust its gain. This digital signal is transmitted by way of line 57 to a DAC 58 from which it is delivered by way of line 59 to the controls in the video camera housing.

It will appear subsequently that although one video gain command (VG CMND) signal is delivered to video camera 59, it has its own servo system for preferentially adjusting the f-stop of the camera aperture 141 on first priority when a gain increase is called for and giving electronic gain second priority. In this way, amplification of video noise is limited to the extent possible.

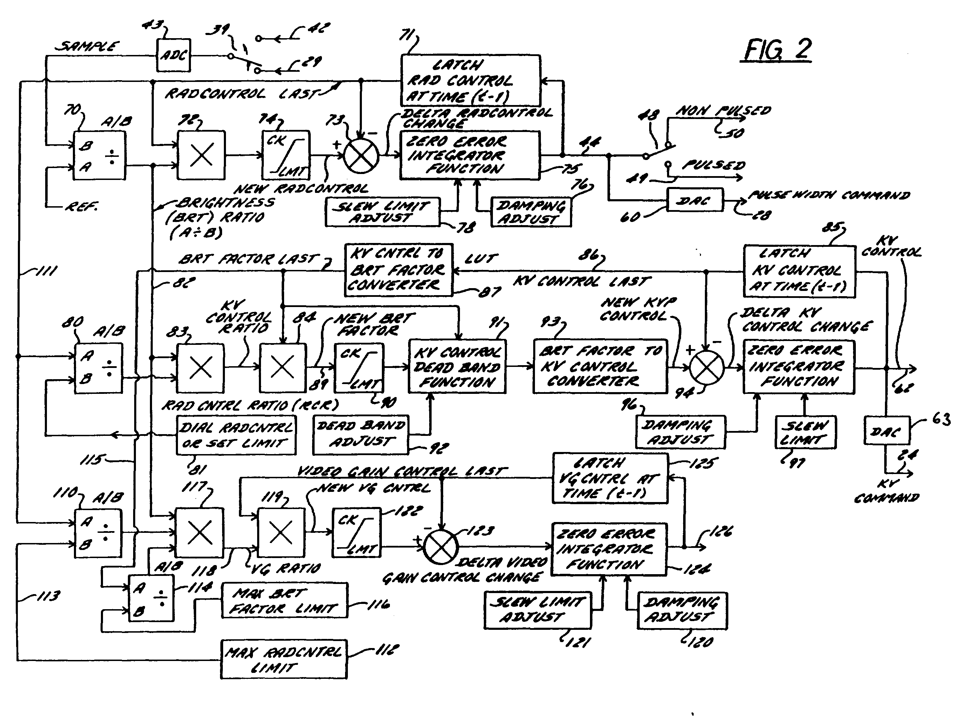

Refer now to FIGURE 2 for a description of circuitry and operations that achieve being able to predict sensing only one variable, namely, present image brightness, and use this single point to control the amount of adjustment of x-ray tube mA, kV and video camera gain required to produce an image of constant brightness without having noticeable brightness transitions.

Assume that a fluoroscopic examination is to be conducted. In such case, switch 39 in the upper left region of FIGURE 2 will connect line 42 to the input of ADC 43. The fluoroscopic image derived by the video camera 32 from the image intensifier 16 is displayed on screen of the TV monitor. Average detector 41 is a known circuit for generating an analog signal representative of the average brightness of the image viewed by the video camera. This brightness sample is the only measurement required to govern mA, kV and video gain to obtain constant image brightness according to the invention. FIGURE 2 is collectively called a predictor processor which was represented by the block marked 47 in FIGURE 1.

In FIGURE 2, the digitized brightness sample signal from the average detector 41 is supplied to input B of a divider 70. A stable digitized reference voltage signal is supplied to the B input of divider 70. By way of example and not limitation and the for sake of the clarity that results from use of concrete numbers, assume that the reference signal is 2 volts. Thus, if A/B is greater than 1, it means that the sample is less than 2 volts and that brightness is too low. If A/B is less than 1, brightness is too high. If A/B is equal to 1, the set or desired brightness exists.

The brightness ratio (BRT RATIO): BRT REFERENCE/BRT SAMPLE is used to develop the basic signal for controlling x-ray tube mA which is called filament command (FIL CMND) or radiation control (RAD CONTROL) which is the first priority and primary signal for controlling brightness. The RAD CONTROL LOOP is the PRIMARY CONTROL LOOP. It is desirable to keep x-ray tube mA or current as high as is permissible ordinarily because the higher the current the higher x-ray photon output of the x-ray tube. High photon intensity results in high image contrast and low image mottling which is desirable.

Assume for the moment that there has been at least one video frame so there is an existing RAD CONTROL signal that brought about the image brightness that has just been sampled during the present image frame. Sampling is synchronized with the vertical blanking pulse of the video camera in the case of fluoroscopy. The last digital RAD CONTROL signal from the immediately preceding sample period is stored in a latch which is labeled RAD CONTROL at (t - 1).

In the present video frame, the new BRT RATIO is one input to a multiplier 72. Assume the instant sample shows a brightness error and BRT at (t - 1) is known. Since x-ray tube mA is represented by the RAD CONTROL output signal and image brightness is directly proportional to mA, the last RAD CONTROL signal at (t -1) is multiplied by the new BRT RATIO. This results in a new RAD CONTROL command signal. This operation is carried on continuously whether the x-ray image intensifier is in motion, that is, scanning over the patient or at rest. Every recalculation must be done within about 2 ms at the beginning of every video frame.

There are, of course, tube mA limits that must not be exceeded and there are limits as to how fast the x-ray tube mA can be changed. So the RAD CONTROL loop in the predictor processor requires slew limiting and damping. For these objectives, the difference between the new RAD CONTROL and the last RAD CONTROL at (t - 1) is taken in a subtractor function 73. The difference represents the DELTA CHANGE in the RAD CONTROL signal required. There is a limit to the magnitude in the x-ray tube mA and, hence, to the RAD CONTROL command signal. Whether the new RAD CONTROL command exceeds the limit is checked in a functional block labeled CK LMT and given reference numeral 74. The limit is checked before the subtraction is made.

Making a very large change in RAD CONTROL within a single video frame, if such were possible, would most likely affect RAD CONTROL loop stability. Also, an assumption is made that the predicted amount of RAD CONTROL or FL CMND change is excessive. Thus, there is a programmable DAMPING FACTOR generated in and selectable for most stable performance in a block marked 76 and labeled DAMPING ADJUST. The DAMPING FACTOR is a fraction which will usually be in a range of 0.5 to 0.9. The calculated new RAD CONTROL command is multiplied by the selected DAMPING FACTOR in a block 75 labeled zero error integrator function. This function compares the DELTA CHANGE between the new prediction and the present command. A damping gain less than unity is applied to this DELTA CHANGE to minimize overshoot and to meet proper settling times. A slew limit factor symbolized by the block marked 78 is used to keep the predicted change within limits that the system can respond to at a given video or cinecamera frame rate. The proper gain must be used to maintain resolution for small changes in brightness and to allow the system to operate with zero error when a large damping value is needed. The result of the multiplication is the DELTA CHANGE relative to the RAD CONTROL command at (t - 1) and the result is that the DELTA CHANGE is made smaller.

The new RAD CONTROL CMND appears on line 44 and is supplied in digital form to switch 48 and to DAC 60 which outputs the RAD CONTROL command on line 28 as the pulse width command for pulsed operation.

In an actual embodiment, values are scaled up and scaled down at the input and output of each loop. The reason is that calculations for the brightness adjustment signals must be done during the video vertical blanking interval in the case where the video camera is used for timing and during the film advance interval where timing is synchronized with the film advance rate. Calculations are performed using integer mathematics to obtain the necessary speed. In integer mathematics, the numbers are rounded off so a decimal value such as 1.25 would round off at 1.0 which would reduce accuracy. Scaling up by 100, for example, would simply convert 1.25 to 125.

Assume a condition now where a large thick patient is in the x-ray beam or that the image intensifier has just scanned over a body region containing bone so as to increase x-ray attenuation and reduce image brightness. Consider a case where the BRT RATIO, A/B is 4, meaning brightness is four times too low. Assume the x-ray tube is on continuously (nonpulsed) in this case. Assume the fluoroscopy scan began when the x-ray power supply was applying 60 kV to the anode of the x-ray tube. So if BRT RATIO was four times too low and the command was multiplied by 4, mA might go up to the limit of available kV. RAD CONTROL would make the mA go as high as would be required to return the BRT RATIO to unity or up to the available mA limit for one sample period to bring about correct brightness within one sample period. Then within a few frames or sampling periods kV and possibly video gain would be fully adjusted and mA would come down.

There is a kV value above the minimum 60 kV in this embodiment which, if applied to the x-ray tube anode at this time will tend to increase the image brightness further. If the higher kV is applied, the image will get too bright and the next sample will be high and the BRT RATIO will be less than unity. This will change the RAD CONTROL signal level and, hence, the x-ray tube mA will be driven down. Having mA go over a preset maximum limit creates an error for kV which forces mA back down to a set or selected limit according to the present invention. BRT FACTOR is related to applied kV as illustrated in the FIGURE 3 graph which is exemplary of one system. The minimum kV is 60 kV. Anything lower than 60 kV would be so severely attenuated in the body that x-ray photons emerging from the body would be insufficient to form an image of all anatomical details in the x-ray beam field. kV and x-ray photon output are not proportional because of the space charge effect. In the FIGURE 3 plot, to double the BRT FACTOR from 1 to 2, kV must be increased from 60 kV to 70 kV.

In the example given in the preceeding paragraph, when the error factor or BRT RATIO was 4, the x-ray tube mA could only be corrected by a factor of 2 on that error. So the additional error is compensated by modifying the kV command. Thus, the resulting change in mA and kV factors would yield a BRT FACTOR of 4.

As will be elaborated later, mA through the x-ray tube is related exponentially to filament current and its temperature. A 1 to 1 relation between image brightness and tube mA must be established. This is obtained by taking the logarithm of the mA command. Filament drive control is only logarithmic for nonpulsed fluoroscopy. In the pulsed x-ray cinerecording mode, control of x-ray tube mA is done by applying and removing negative biasing voltage to the grid of the x-ray tube during each exposure frame. The pulse width is directly proportional to x-ray tube mA. The x-ray tube mA is held at a fixed value in the pulsed cinerecording mode.

In accordance with the invention, in the fluoroscopic mode if a brightness error occurs, a calculation is made to determine the change that must be made in the FIL CMND to correct the brightness error. The correction is not made in a single step or several steps as in the prior art up to the mA limit whereupon kV adjustment begins and runs to its limit at which time video camera gain adjustment starts. Rather, in the new brightness controller, when a brightness error is detected and the BRT RATIO is determined, the tube mA command is adjusted and a correction is made in the kV command at the outset. The size of the kV command correction depends on the BRT RATIO or the size of the error. In other words, the kV correction required to comply with the detected brightness error as manifested by the FIL CMND is predicted at the outset so the whole kV change is not made at once and rapid changes in image contrast that would result from large step kV changes are avoided. If the required correction is large, part of the error correction will be made by adjusting video gain at the outset, too.

How kV is adjusted will now be discussed. There has to be some brightness error to cause kV to be driven up or down. A prediction is made as to what proportion or ratio of the brightness error is to be corrected by adjusting x-ray tube applied kV. kV is adjusted in response to the developed kV COMMAND signal concurrently with the mA adjustment dictated by the RAD CONTROL or filament current command. If operation is in the fluoroscopic or continuous mA mode rather than the cinerecording or pulsed mA mode, a video gain command may also be developed, but will not be significant unless there is a brightness error which cannot be corrected within the available x-ray tube mA and kV ranges or limits. In any case, the mA, kV and video gain (VG) commands are developed and executed simultaneously for each brightness sample period.

The kV loop begins with a divider 80. The A input to the divider is RAD CONTROL LAST (RCL) which is the digital RAD CONTROL signal stored in latch 71 for the preceeding BRT sample at (t - 1) where (t) is the time of the present sample period. The B input to divider 80 is a manually selected or so called DIALED RAD CONTROL signal developed in a block marked 81. In the alternative, the B input can be supplied with a fixed SET LIMIT signal which usually corresponds to 95% of maximum mA in the non-pulsed fluoroscopic mode and 95% of maximum pulse width in the pulsed fluoroscopic mode. What this amounts to is that under conditions where the kV signal is above the minimum allowed (60 RV) the RAD CONTROL or primary loop maintains a signal level equal to 95% of its maximum value. The extra 5% allows the primary loop to correct for small underbrightness conditions without having to wait for the usually slower kV response. In this way mA or pulse width changes can correct for small brightness errors immediately and at the same time produce an error proportional to the ratio of the set limit in the last predicted RAD CONTROL command which will cause kV to move, creating a small brightness error, until the RAD CONTROL signal is forced back to its set limit again. The DIALED RAD CONTROL signal is used in connection with performing cinerecording in the pulsed x-ray tube mA mode. In the pulsed mode, image brightness depends on average mA. As pulse width increases, x-ray tube mA increases and as pulse width decreases mA decreases. Thus, mA is related to pulse width and pulse width is selectable by the user. However, in the pulse mode, filament current, hence, electron emissivity is held constant so the mA through the tube is at a fixed level when conductive or biased on and only the pulse durations are varied. An example of the value of providing DIALED RAD CONTROL is where the user might want to cinerecord at a rate sufficiently fast to provide the effect of stopping motion of the heart, for instance. As an example, assume that the user wants a pulse width of no more than 5 ms to stop motion, a signal corresponding to 5 ms is entered or dialed into input B of divider 80. If operation is in the non-pulsed fluoroscopic mode, a fixed SET LIMIT signal developed in block 81 is applied to input B of divider 80. A SET LIMIT signal sets the x-ray tube mA limit.

The RAD CONTROL loop is indifferent to whether tube mA is varied continuously or as an average current resulting from varying pulse width. This loop is governed by detected image brightness in each sample period and it makes no difference how the RAD CONTROL output or FIL CMND signal is processed later to bring about the correct brightness level.

In FIGURE 2, divider 80 takes the ratio of A to B, that is, the ratio of RAD CONTROL at (t - 1) with respect to DIALED RAD CONTROL. The result is a RAD CONTROL RATIO (RCR). This represents the error between DIALED RAD CONTROL and what the effective tube mA actually was at (t - 1). Now, how much kV must be altered to cause an x-ray tube mA corresponding indirectly to 5 ms x-ray exposure is determined by the ratio RCR/BRT RATIO. BRT RATIO is used in the RAD CONTROL loop, the kV loop and the VG loop and is only calculated once. BRT RATIO is supplied by way of digital line 82 to one input of a multiplier 83. The result of multiplication is the kV CONTROL RATIO.

If pulse width represented by DIALED RAD CONTROL and RAD CONTROL at (t - 1) differ, the ratio will be other than 1 and the ratio is processed further and is used to alter x-ray tube kV.

Where the RAD CONTROL loop only detects a brightness error, the kV loop will detect the brightness error and also an error due to how far the pulse width differs from the dialed pulse width that the user wants for the particular fluoroscopic procedure.

A numerical example can be clarifying. Assume a 5 ms pulse width is selected or dialed in. RAD CONTROL can go above tube mA corresponding to 5 ms to quickly correct for brightness changes. For example, at an arbitrary starting time the x-ray brightness loop is settled with a pulse width of 5 ms. A big increase in x-ray attenuation causes the brightness to be cut in half and is sampled in the next sampling period. This event would result in a BRIGHTNESS RATIO of 2 and a predicted pulse width change of 5 ms resulting in a new commanded pulse width of 10 ms. Brightness would be correct because RAD CONTROL would go way up to get the proper brightness that instant. Since in the next sampling period RAD CONTROL predicted 10 ms, an error of 10/5 (RCR) or 2 results because 5 is the selected pulse width. This is a positive error to the kV loop. This error would cause the kV to be increased. The kV change would cause excessive brightness for the current sample period. On the first pass through the RAD CONTROL loop, the RAD CONTROL signal would dictate that the tube mA in terms of pulse width should be increased because the BRT RATIO indicates low brightness. After the first sample period ends, the RAD CONTROL signal at (t - 1) was stored in latch 71 as RAD CONTROL LAST (RCL) and it was a value that called for increasing brightness to a tube current corresponding to 10 ms. Now, during the present sampling period the RCL is ratioed to DIALED RAD CONTROL in divider 80. From the resulting RAD CONTROL RATIO (RCR) it therefore appears to the kV loop that brightness is too low since RCL corresponds to 10 ms and DIALED RAD CONTROL is set at 5 ms. Now, the RAD CONTROL ratio output from divider 80 is multiplied by a brightness ratio of one in multiplier 83 and the result is a kV CONTROL RATIO of 2. After further processing, as will be explained, the kV CONTROL RATIO will cause kV to increase to correct for what, to the kV loop, seems to be a brightness deficiency. The effect of driving kV up is to further increase the brightness a little during the present sample period. Now, the BRT RATIO detected by the RAD CONTROL loop indicates above reference brightness and the RAD CONTROL loop predicts a command that will cause pulse width and brightness to decrease. Within a few sample periods, the RAD CONTROL signal will decrease to a level where RAD CONTROL LAST on the input of divider 80 will reach the value of the DIALED RAD CONTROL input to divider 80 and kV will stay where it has been commanded to achieve proper brightness without exceeding the dialed 5 ms pulse width.

To summarize, the RAD CONTROL command exceeded the dialed value so an error was indicated to the kV loop. kV increased and caused brightness to go a little high. Then the RAD CONTROL loop which only detects brightness, detects high brightness and the RAD CONTROL COMMAND decreases until BRT RATIO is 1 and there is no more brightness error. kV was changing and remained at the value it was at when the kV ratio reached a value of 1.

Ostensible excessive brightness prevails only while the loops are settling out and this would only be a few sample periods. No changes in image brightness would be perceptible because the RAD CONTROL loop sets the new pulse width and average tube mA value instantly. Brightness on the video monitor screen 37 is constant but kV is changing gradually and so is the pulse width.

Brightness is not directly proportional to kV, it is a function of kV dependent on the particular x-ray tube used. For example, the kV CONTROL RATIO out of multiplier 83 might call for anywhere from 1 to 7 times brightness change but the kV would not correspond. The plot for brightness factor (BRT FACTOR) versus tube anode kV for one x-ray tube model is shown in FIGURE 3. The brightness factor is normalized for a kV range of 60 to 120. If kV is set at 60 with a BRT FACTOR of 1 and it is desired to double brightness to a factor of 2, the kV would have to be increased to about 68 kV, for example, for the particular tube. If the BRT FACTOR were 4, about 83 kV would be applied.

In the FIGURE 2 kV loop, the product of the previous sample period BRT RATIO from the RAD CONTROL loop and the RAD CONTROL/DIALED RAD CONTROL is called the kV CONTROL RATIO and is output from multiplier 83. Again, as in the RAD CONTROL loop, the new kV CONTROL RATIO command is multiplied in multiplier 84 by the kV CONTROL value at (t - 1), but not directly since it is necessary to convert the kV CONTROL value into BRT FACTOR terms because of the lack of direct proportionality between brightness and kV. The kV CONTROL at (t - 1) is stored in latch 85. It is read out and is an address to the look-up table (LUT) which is labeled kV CONTROL TO BRIGHTNESS FACTOR CONVERTER 87. The addressed BRT FACTOR corresponding to the kV CONTROL RATIO at (t - 1) from latch 85 is supplied by way of multiple lines to multiplier 84. The product of multiplier 84 appearing on multiple 89, that is, the NEW BRT FACTOR is input to a circuitry block marked 90 wherein a check is made as to whether the requested BRT FACTOR is attainable within the available kV range. In the kV loop there is a kV CONTROL DEAD BAND FUNCTION represented by the block marked 91 and a DEAD BAND ADJUST BLOCK marked 92 which will be disregarded for the moment. Thus, the NEW BRT FACTOR is passed through block 91 to a block 93 which is labeled BRT FACTOR to kV CONTROL converter and is marked 93. This block is a look-up table that is the converse of LUT 87 and which is used to convert BRT FACTOR back to the new kV CONTROL again for the corresponding required kV to be driven to.

Now, as in the RAD CONTROL loop, the delta change is found again. In the new kV loop, delta change is the kV CONTROL minus kV CONTROL LAST at (t - 1). The kv CONTROL COMMAND from the previous frame (kV CONTROL LAST) is subtracted from NEW kV CONTROL in subtractor 94. The delta change is again input to a ZERO ERROR INTEGRATOR FUNCTION. This function uses the delta change in the kV CONTROL resulting from the NEW kV CONTROL - kV CONTROL LAST as its input. A damping gain less than unity is stored in DAMPING ADJUST block 96 and this gain factor is applied to the delta change to minimize overshoot and induce proper settling times. A SLEW LIMIT factor represented by the block 97 is used to keep the change within limits that the system can respond to at a given frame or sample rate. The proper gain must be used to maintain resolution for small changes and allow the system to operate with zero error when a large damping value is needed.

By way of example, say that the kV CONTROL RATIO in the kV loop had a value of 2 which would call for doubling of brightness from a predicted kV change. If at the time of the previous sample period exposure the kV CONTROL value was 60, the system uses the FIGURE 3 graph where it is evident that a BRT FACTOR of 2 corresponds to a new kV of about 68 kV. This delta change of 8 kV might be beyond the slew rate or rate of change of the kV power supply but by checking and making slewing and damping modifications the real kV change is produced and this may result in a command to change less than 8 kV in one sampling. It may take a few frames or sampling periods to reach 68 kV but brightness of the image on the video monitor screen will appear constant because of the quick correction made in x-ray tube mA by the RAD CONTROL command. The kV command signal is sent out on line 98.

The dead band function symbolized by blocks 91 and 92 will now be discussed. Its purpose is to prevent making kV changes unless the calculated required brightness change is 5% or more in this particular embodiment. This prevents hunting and avoids loop instability. In the actual embodiment, if the kV change is greater than the dead band, the NEW BRT FACTOR is sent to converter 93. If the kV change is less than the dead band, the BRT FACTOR at (t - 1) is sent out again.

The description thus far reveals how, in accordance with the invention, a single condition is detected, namely, image brightness and how control of the x-ray tube current and kV are both governed by the single point condition. It has been shown that the x-ray tube mA is controlled basically in response to the ratio (RAD CONTROL) of a reference brightness signal to the detected brightness signal. It has also been shown how the RAD CONTROL COMMAND during one preceding brightness sampling period is compared to a set or selected RAD CONTROL value to provide an error which governs x-ray tube kV and alters kV depending on the size of the brightness ratio so that a kV control loop has information as to where the x-ray tube mA or RAD CONTROL should be.

The next matter to be discussed is how extending the concept of repeated ratioing can be used to control video gain. The concept can be extended to additional control loops, all based on using a single image brightness measurement. It has been shown that kV control depends on RAD CONTROL and now it will be shown how, in accordance with the invention, control of video camera gain is made interdependent with tube mA (pulse with) and kV.

It is an objective to increase video gain on a third or last priority basis after there is a prediction as to what part of the full range of the tube mA and kV range are used up. However, in accordance with the invention, if the sensed brightness error is very large, the need for video gain increase is predicted and gain is changed to some degree immediately. Video gain is directly proportional to image brightness.

The first stage in the video gain control loop in FIGURE 2 is a divider 110. RAD CONTROL at (t -1) is supplied by way of lines 111 from latch 71 to the A input of divider 110. A reference signal generated in block 112 called MAX RAD CONTROL LIMIT is applied by way of lines 113 to the B input of divider 110. The second stage is a divider 114. The BRT FACTOR at t - 1 from the kV CONTROL loop latch 85 is applied by way of lines 115 to the A input of divider 114. A maximum brightness factor reference signal generated in the block 116 which is labeled MAX BRT FACTOR LIMIT is applied to input B of divider 114. It should be understood that BRT FACTOR at (t - 1) in the kV loop has resulted from using the LUT in converter 87 to convert kV in terms of brightness. The look-up table has a maximum limit which is in block 116. The RAD CONTROL signal also has a limit because available mA range is limited. The kV according to FIGURE 3 is limited in this example to 120 kV. The tube mA range for fluoroscopy may be up to a 10 mA limit by way of example and not limitation.

The outputs from dividers 110 and 114 are inputs to a multiplier 117. The third input to multiplier 117 is the BRT RATIO or ratio of a reference brightness signal A to a sample brightness signal B that was used in the RAD CONTROL primary control loop and in the kV loop. The BRT RATIO is supplied to the third input by way of line 82.

A numerical example will elucidate what happens in the video gain control loop. Assume that the mA limit is 10 mA and the RAD CONTROL command corresponds to a desired 5 mA. The output ratio of divider 110 would be 5/10 or 1/2. Assume the BRT FACTOR needed is a ratio resulting in 4 which, according to FIGURE 3, would require about 80.35 kV. This is 4/7th of the brightness range available over the kV range of 60 to 120 kV. Now assume that at (t -1) the x-ray attenuation was high, tending to yield a dark image. Now assume that the brightness reference voltage A is 2 and the brightness sample voltage B reads 0.2 in which case A/B equals 2/.2 or 10. These three ratios or fractions are multiplied in multiplier 117 to yield a VG RATIO appearing on digital lines 118. In general terms video gain ratio is determined as follows:

$$\frac{\text{BRT FACTOR at (t - 1)}}{\text{MAX BRT FACTOR LIMIT}} \; x \; \frac{\text{RAD CONTROL at (t - 1)}}{\text{MAX RAD CONTROL LIMIT}} \; x$$

$$\frac{\text{REF VOLTAGE}}{\text{BRT SAMPLE VOLTAGE}} = \text{VG RATIO}$$

For the above numerical example :

$$\frac{4}{7} \; x \; \frac{5 \text{ mA}}{10 \text{ mA}} \; x \; \frac{2 \text{ volts ref.}}{0.2} = 2.85 = \text{VG RATIO}$$

The result in this example is greater than 1 so video gain will increase. If the ratio came out to be 1 it would result from there still being a lot of mA and kV range remaining so there would be no video gain increase needed. It should be evident that video gain would tend to be increased if the ratios or first two terms in the above equations are large and approaching 1 indicating that mA and kV are already near their limits.

After the VG RATIO is determined the ratio signal is processed in the video gain loop similarly to processing in the RAD CONTROL loop. In the VG loop, the VG RATIO and VIDEO GAIN CONTROL at (t - 1) are multiplied in a multiplier 119 to yield the NEW VG CONTROL command. There are limits on the rate at which video gain can be changed and there are limits on the range of gain. So the loop requires damping and slew limiting indicated by the blocks 120 and 121. The damping adjust and slew limit adjust are simply fractional factors which multiply times calculated video gain to limit the amount of change permitted in a sampling period. The gain limits are checked first as symbolized by the block 122 and then the NEW VG CONTROL and VG CONTROL at (t - 1) are compared in subtractor 123 and the result, namely, the delta change is sent to the zero integrator function block 124. In block 124 the slew limit is used to keep the predicted gain change within limits that the video camera electronics can respond to at the given frame rate. The damping fraction is applied to the delta change to minimize overshoot and to meet proper settling times. The processed VG CONTROL signal output from the zero error integrator function is stored in latch 125 for one sample period and the VG CONTROL signal is also sent out on digital lines 126.

It may be noted again that in the actual embodiment, values involved in the calculations are in digital form and that the math functions are carried out with integer math techniques for the sake of speed in the kV and VG CONTROL loops as was previously discussed in connection with the RAD CONTROL loop.

The video gain command, VG CONTROL, is output on line 126 in FIGURE 2 and appears on a line 126 in FIGURE 4. FIGURE 4 shows the camera control system which is in the housing for the video camera 32. There are two ways of controlling the gain or brightness output of the video camera. One is to control the aperture size. The aperture blades are marked 141. The other is to control electronic gain. The servo system or aperture drive is represented by the block marked 142 which will be understood to contain electronic servo drive circuitry and a servo motor, neither of which are shown, that adjust the opening between blades 141 and, hence, the amount of light going to the target of the video camera.

Although the video gain control loop in FIGURE 2 only produced one VG CONTROL command signal, this signal is used to drive the camera control so as to give priority to adjusting the aperture size and then electronic gain in FIGURE 4. Increasing electronic gain is restrained because it will increase noise as well as brightness.

FIGURE 4 shows a functional block diagram implementation of the basic circuit used to receive the VG CONTROL command from FIGURE 2 and to derive an aperture drive command and an electronic video gain command.

A preset electronic gain reference signal is generated in the block 140 which is labeled PRESET ELECTRONIC GAIN. This signal is applied to one input 143 of a summing amplifier 144. The output of amplifier 144 is a control signal for changing the electronic gain of a video gain amplifier 145 which has an input 146 for analog video signals generated in video camera 32. The output of the video gain amplifier provides the video input for television monitor 36 in FIGURE 1 by way of line 35. A preset aperture gain reference signal generated in the block 139 which is labeled PRESET APERTURE GAIN. This signal is applied to one input of the summing amplifier 150 by way of line 154. The output of amplifier 150 is a control signal for changing the aperture position. This signal enters input 152 and is compared in subtractor 153 with the result, namely, the aperture position error command. A block marked 148 and identified as an area-to-video gain converter is in a feedback loop which senses aperture size and produces a corresponding output signal on line 149.

The VG CONTROL command from FIGURE 2 enters the video gain control circuit by way of line 126. The video gain control signal is applied to input 161 and compare in subtractor 159 with input 160. The resulting difference signal or electronic gain command is summed with the PRESET ELECTRONIC GAIN at input 143 of summing amplifier 144. The VG CONTROL command from FIGURE 2 entering by way of line 126 is tapped and transmitted by way of line 155 to one input of the summing amplifier 150. A preset aperture gain reference signal generated in block 139 is applied to input 157 of subtractor 156 by way of line 147. Input 157 is subtracted from present aperture gain signal 158. The difference signal representing the total area covered by the aperture becomes one input 160 to the subtractor 159.

There are, of course, various scale factors that must occur and are not shown but are used, for example, to insure similar signal units operating on similar signal units. All conversion factors and scale factors are assumed to be contained in the named block functions.

FIGURE 5 shows the operation of the control circuit of FIGURE 4 with four signal timing diagrams. The first signal represents the VG CONTROL input from line 126. This is the video gain or brightness change required of the camera as predicted by the automatic brightness control predictor function VG CONTROL command signal from FIGURE 1. The second signal represents the movement of the aperture 141 in FIGURE 4. The third signal represents the changing electronic video gain signal output of summing amplifier 144 in FIGURE 4. The fourth timing signal represents the resulting video output on line 35 of FIGURE 4.

The aperture position is allowed to change continuously provided there exists a video gain command and the aperture position is not yet at its limit. The electronic video gain is also allowed to make a full correction. The electronic gain assumes the primary loop control function as did the RAD CONTROL loop in the predictor function shown in FIGURE 2. The electronic gain responds fast, but amplifies the noise as well as the signal and is therefor not desirable unless absolutely necessary to maintain correct brightness of the displayed image. The aperture position is sampled on a frame-by-frame basis and the aperture positions corresponding to brightness change and video gain change is subtracted from the electronic gain. The video gain control system will settle as a gain equal to the video gain command with as little electronic gain as needed. When the system finally settles out the electronic gain is equal to the remaining gain needed to satisfy the VG CONTROL command after the aperture position contribution to gain is at its limit.

The taper function, symbolized by the block 53 is a transfer function which is needed to convert input commands expressed in one kind of units to output commands of another kind of units. The taper function circuitry and associated circuitry for accounting for changes in the distance between the x-ray tube focal spot (S) and the image plane (spot-to-image distance, SID) is described in detail and shown in FIGURE 2 of US Patent No. 4590603.

The transfer function of x-ray tube filament heating current and the mA flowing through the tube is an exponential function. Brightness is directly proportional to mA. Filament current is varied to obtain image brightness changes only when the system is operating in the continuous fluoroscopic or non-pulsed mode. The opposite of an exponential is a logarithmic curve. So in the system being described, the filament current command or RAD CONTROL command is converted to its logarithmic equivalent in a look-up table, not shown, in block 51 of FIGURE 1. In the taper function as kV is raised, mA is lowered to keep 10R/min at the patient entrance plane. The taper function circuit 53 has two inputs, one of which is the filament current command and the other the kV command as is the case in FIGURE 2 of the reference patent and the output drives the filament current controller 21.

The calculations performed in the various loops are collected and set forth below for the convenience of the reader. The acronyms whose corresponding terminology is not specifically defined hereafter are as follows:

| ACRONYM | = | TERM |
|---|---|---|
| BRT RATIO | = | BRIGHTNESS RATIO |
| BRT REF | = | BRIGHTNESS REFERENCE |
| BRT SAMP | = | BRIGHTNESS SAMPLE |
| RAD CONTROL | = | RAD CONTROL |
| LUT | = | LOOK UP TABLE |
| MIN kV | = | MINIMUM KILOVOLTS |
| SET LMT | = | SET LIMIT |
| VG CNTRL (VGC) | = | VIDEO GAIN CONTROL |
| VGR | = | VIDEO GAIN RATIO |

RAD CNTRL LOOP

STEP 1 - Determining brightness ratio from the sample. The results indicate a brightness error factor. 1 = no error, > 1 = low brightness, and < 1 = high brightness.

$$BRT\ RATIO = BRT\ REF\ /\ BRT\ SAMP$$

where: BRT REF = desired brightness level (calibration point)        and
       BRT SAMP = sampled brightness signal.
Note: This sample shall have a minimum limit so that it cannot go to "0". The limit should be set at a point where the BRT SAMP error starts to become significant.
       STEP 2 - Calculate the NEW RAD CNTRL value required to correct the brightness error represented by the BRT RATIO.

$$NEW\ RAD\ CNTRL = RAD\ CNTRL\ X\ BRT\ RATIO$$

$$min\ lmt \Leftarrow NEW\ RAD\ CNTRL \Leftarrow max\ lmt$$

where:

       min lmt = lowest RAD CNTRL allowed and
       max lmt = highest RAD CNTRL allowed

kV CNTRL LOOP

       STEP 3 - Determine need for kV override.
       This procedure determines if kV override is needed. That determination is based on kV keeping the RAD CNTRL at its SET LMT.

$$kV\ RATIO = [SET\ LMT/RAD\ CNTRL\ LAST]\ x$$

$$BRT\ RATIO$$

where: SET LMT = 95% maximum RAD CNTRL allowed or DIAL LMT (Pulse Mode), whichever is less.
       From look up table (LUT) find BRT FACTOR for PRESENT kV.

$$NEW\ BRT\ FACTOR = BRT\ FACTOR\ X\ kV\ RATIO$$

       STEP 4 - Check deadband limits.
       From LUT find NEW kV
where: MIN kV (dial) $\Leftarrow$ NEW kV $\Leftarrow$ MAX kV

VG CNTRL LOOP

       STEP 5 - Determine VIDEO GAIN CNTRL change.

$$VID\ GAIN\ RATIO = [BRT\ RATIO]\ X\ [RAD\ CNTRL/MAX$$

$$LMT]\ X\ [BRT\ FACTOR/MAX\ BRT\ FACTOR]$$

$$NEW\ VGC = VGC\ X\ VGR$$

where: 0 $\Leftarrow$ NEW VGC $\Leftarrow$ MAX LMT

At this point the predictor function is complete. The following steps determine the step change in control parameters to be made for this sample period.

The step size is determined by applying the proper slew limit and damping factor to each control parameter. The slew limit is adjusted to keep the command signal from getting ahead of the controlled parameter when the control element is in slew limit. The damping factor sets the small signal response of the control. Both compensations change proportionately with sample (exposure) rate changes.

(RAD CNTRL) ZERO ERROR INTEGRATOR FUNCTION

STEP 6 - Determine RAD CNTRL change

$$RAD\ CNTRL\ CHANGE = (NEW\ RAD\ CNTRL\text{-}RAD\ CNTRL)$$

$$x\ RCDF$$

where:

-MAX STEP $\Leftarrow$ RAD CNTRL CHANGE $\Leftarrow$ + MAX STEP AND
RCDF = Rad Cntrl Damping Factor (=<1) AND
MAX STEP = SLEW LIMIT THEN
RAD CNTRL = RAD CNTRL + RAD CNTRL CHANGE

(kV CNTRL) ZERO ERROR INTEGRATOR FUNCTION

STEP 7 - Determine kV CNTRL change

$$kV\ CNTRL\ CHANGE = (NEW\ kV\ CNTRL - kV\ CNTRL)\ X$$

$$kV\ DF$$

where:

-MAX STEP $\Leftarrow$ kV CNTRL CHANGE $\Leftarrow$ +MAX STEP and
kV DF = kV Damping Factor (=<1)
kV CNTRL = kV CNTRL + kV CNTRL CHANGE

(VG CNTRL) ZERO ERROR INTEGRATOR FUNCTION

STEP 8 - Determine VGC change.

$$VGC\ CHANGE = (NEW\ VGC\text{-}VGC)\ X\ VGCDF$$

where:

-MAX STEP$\Leftarrow$ VGC CHANGE $\Leftarrow$ +MAX STEP and
VGCDF = VGC Damping Factor (=<1)
VGC = VGC + VGC CHANGE

FURTHER DEFINITION

The kV CNTRL and VGC can go directly to their appropriate controllers. The RAD CNTRL signal can go directly to the pulse width control in the pulse. To properly drive the taper function for mA control the input to the taper must take the form:

FIL TAPER COMND = LOG (RAD CONTROL signal)

The output of the taper function is then the filament drive command.

### Claims

1. A fluoroscopic system comprising an X-ray tube (10) having an anode (11) and a cathode (12), means (21,25,27,61) for adjusting the average current flowing between the anode and cathode of the tube during an X-ray exposure sequence, means (23) for controlling the kilovoltage applied to the anode of the tube, an image intensifier (16) operative to convert an X-ray image produced by an X-ray beam (14) from the tube (16) to an optical image, a video camera (32) for converting said optical image to analog video signals; means (139-162) for adjusting the gain of said video camera, a video monitor (36) for translating said analog video signals to a visible image, and a device for controlling image brightness, said device comprising:

   means (38,32,41,43) for sampling the brightness of the image during successive periods and for producing a brightness signal representative of brightness during a current sampling period;
   means for producing a constant reference brightness signal;
   a primary control loop including means (70) for taking the ratio of said reference brightness signal (A) to said brightness signal (B) hereinafter called brightness ratio signal (82) such that a ratio other than 1 indicates an error between the brightness signal and the reference brightness signal, said primary loop including;
   means (71) for storing a command signal hereinafter called rad control last signal (111) corresponding to the level to which the X-ray tube average current was commanded to be at by a rad control signal (44) during the brightness sampling period preceding the current sampling period, hereinafter called the preceding sampling period, and
   means (72) for multiplying the brightness ratio signal of the current sampling period by the rad control last signal to produce a new rad control signal corresponding to a command signal to which said average current adjusting means responds to cause said brightness ratio signal to substantially equal 1;
   means (73) for subtracting said rad control last signal from said new rad control signal to produce a difference signal for producing said rad control signal for commanding said means for adjusting the X-ray tube current average to change the average current flowing between the anode and cathode of the tube;

   a loop hereinafter called kV loop for determining the proportion of the brightness error that needs to be corrected by adjusting the kilovoltage applied to the X-ray tube anode, said kV loop including:

   means (80) for taking the ratio of said rad control last signal and a dialled rad control signal corresponding to a predetermined conduction interval for the X-ray tube during each brightness sampling period and, hence, to the desired average X-ray tube current, the signal resulting from taking the ratio of the rad control last and dialled rad control signals being hereinafter designated the rad control ratio signal;
   means (83) for multiplying said rad control ratio signal and said brightness ratio signal for producing a kV control ratio signal corresponding to how much kV adjustment is required to correct brightness if said primary loop predicted rad control signal equals a value different than the dialled rad control signal which corresponds to the brightness error that would result if the rad control signal were forced to be equal to the dialled rad control signal;
   means (85) for storing a command signal hereinafter called kV control last (86) corresponding to the level to which the X-ray tube kV was commanded to be at by a kV control signal (62) during the preceding sampling period;
   means (87) for converting said kV control last signal to a brightness factor last signal (115) representing a normalised brightness of 1 corresponding to the minimum tube kilovoltage available;
   means (84,93) for multiplying said brightness factor last signal and said kV control ratio signal to produce a new brightness factor signal (89) and then converting said new brightness factor signal to a new kV control signal, and
   means (94) for subtracting said kV control last signal from said new kV control signal to produce a difference signal for producing said kV control signal for commanding said means for controlling the X-ray tube anode voltage to change the kilovoltage applied to the anode of the tube.

2. The device according to claim 1 including a video gain loop hereinafter called VG loop for determining the proportion of the brightness error that needs to be compensated by adjusting the gain of said video camera, said VG loop comprising;

means (112) for generating a signal corresponding to a maximum limit of the rad control signal hereinafter called max rad control limit signal (113) and means (110) for taking the ratio of the rad control last signal (A) to the max rad control limit signal (B) to produce a first resulting signal;

means (116) for generating a maximum brightness factor limit signal corresponding to a maximum limit of said brightness factor last signal;

means (114) for taking a ratio of said brightness factor last signal (A) and said maximum brightness factor limit signal (B) to produce a second resulting signal;

first multiplier means (117) for multiplying said first and second resulting signals and said brightness ratio signal together to yield a video gain ratio signal (118) hereinafter called VG ratio signal representative of the predicted brightness error to be corrected for by changing the video camera gain if both the kV control signal and the rad control signal were to reach their maximum limits;

storage means (125) for storing a video gain last signal hereinafter called VG control last signal corresponding to the level to which the video camera gain adjusting means was commanded to be at by a VG control signal (126) during the preceding sampling period;

means (119) for multiplying said VG ratio signal and said VG control last signal to produce a new VG control signal; and

means (123) for subtracting said VG control last signal from said new VG control signal to produce a difference signal for producing said VG control signal for commanding said means for adjusting the gain of said video camera to change the gain of the video camera.

3. A system according to claim 1 wherein said kV control loop further includes:

means (81) for producing said dialled rad control signal; and
means (63) for coupling said kV control signal to said kilovoltage controlling means.

4. A system according to claims 2 and 3 wherein said video gain loop further comprises:

means (124) for coupling said difference signal of said subtracting means of said VG loop to an input of said storage means of said VG loop for storing said VG control signal;
means (58) for coupling said VG control signal to said video camera gain adjusting means;

5. A system according to any preceding claim wherein said X-ray tube comprises a control electrode (13) and the current adjusting means includes:

a bias voltage source (25) coupled to said control electrode of said X-ray tube for applying a negative bias voltage to said control electrode;
bias control means (27) operative to switch said source on and off in response to a pulse timing signal;
a pulse timer (61) connected to said bias control means for operating said bias control means, said pulse timer having an input for a pulse width command signal (28) and being operative to produce said pulse timing signal whose duration varies in response to the magnitude of said pulse width command signal;
said radiation control signal constituting said pulse width command signal, and means (60) for coupling said signal to said pulse timer.

6. A system according to any preceding claim wherein the current adjusting means includes:

a filament current controller (21) for controlling the current through the filament in said X-ray tube cathode and to correspondingly control the electron beam current through said tube in response to a command signal;
means (51) for converting a signal to its corresponding logarithmic value signal, said means (51) having input means for receiving said rad control signal (50,49) and having output means (51) for outputting a logarithmic value signal (52);
a taper function circuit (53) having input means for receiving said logarithmic value signal and said kV control signal and having output means, said taper function circuit being operative to convert said kV control signal and said radiation control logarithmic signal to produce a first command signal on its output means which is limited to a value that will preclude exceeding a predetermined radiation rate for a body in the X-ray beam, and means (54) coupling said first command signal to said filament current controller to control said filament current.

7. A system according to claims 2 and 5 including aperture shutter means (141) in the optical path to said video camera;

an adjustable gain video signal amplifier (145) having an input (146) for said video signals from said video camera and a gain control input for said VG control signal and having an output;

means (142) for driving said shutter means to control the area of the aperture thereof;

means (139) for generating an aperture gain reference signal (147,155) representative of a preset aperture gain;

a first summing amplifier (150) having input means for said VG control signal (155) and for said aperture gain reference signal (154) and having an output;

a first substracter (153) having an input (152) coupled to said first summing amplifier output, having another input (151) and an output coupled to said driving means;

an area-to-video gain converter (148) operative to feed back to said other input (151) of the first subtracter feedback signal (149) representative of the area of the aperture of said aperture shutter means;

a second subtracter (156) having an input (157) for receiving said aperture gain reference signal (147), an input (158) for receiving said feedback signal and an output, said second subtracter continuously producing a difference signal that varies in proportion to the area of the aperture of said aperture shutter means;

a second summing amplifier (144) having first and second input means and having an output coupled to said gain control input of said video signal amplifier for varying the electronic gain of said video camera;

means (140) for generating a second reference signal (143) representative of a preset electronic gain for said video signal amplifier, said second reference signal being coupled to said first input means of said second summing amplifier;

a third subtracter (159) having an input (161) receiving said VG control signal and an input (160) receiving the difference signal of said second subtracter and having an output (138) coupled to said second input means of said second summing amplifier; and

means (35) for coupling said output of said video signal amplifier to said video monitor.

## Patentansprüche

1. Durchleuchtungsvorrichtung enthaltend eine Röntgenröhre (10), die eine Anode (11) und eine Kathode (12) aufweist, eine Einrichtung (21, 25, 27, 61) zum Einstellen des mittleren Stroms, der zwischen der Anode und Kathode der Röhre während einer Röntgenbestrahlungssequenz fließt, eine Einrichtung (23) zum Steuern der an die Röhrenanode angelegten Hochspannung, einen Bildverstärker (16) zum Umwandeln eines Röntgenbildes, das durch ein Röntgenbündel (14) aus der Röhre (16) erzeugt ist, in ein optisches Bild, eine Video-Kamera (32) zum Umwandeln des optischen Bildes in analoge Videosignale, eine Einrichtung (139-162) zum Einstellen der Verstärkung der Video-Kamera, einen Video-Monitor (36) zum Umsetzen der analogen Video-Signale in ein sichtbares Bild und eine Vorrichtung zum Steuern der Bildhelligkeit, wobei die Vorrichtung enthält:

eine Einrichtung (38, 32, 41, 43) zum Abtasten bzw. Sampeln der Helligkeit des Bildes während aufeinanderfolgender Perioden und zum Erzeugen eines Helligkeitssignals, das die Helligkeit während einer laufenden Abtastperiode darstellt;

eine Einrichtung zum Erzeugen eines konstanten Referenz-Helligkeitssignals;

eine primäre Regelschleife mit einer Einrichtung (70) zum Bilden des Verhältnisses des Referenz-Helligkeitssignals (A) zu dem Helligkeitssignal (B), das nachfolgend Helligkeits-Verhältnissignal (82) genannt wird, derart, daß ein Verhältnis ungleich 1 einen Fehler zwischen dem Helligkeitssignal und dem Referenz-Helligkeitssignal angibt, wobei die primäre Schleife enthält:

eine Einrichtung (71) zum Speichern eines Sollwertsignals, das nachfolgend letztes Strahlungs- bzw. Rad-Steuersignal (111) genannt wird und dem Wert entspricht, auf den der mittlere Röntgenröhrenstrom durch ein Rad-Steuersignal (44) während der Helligkeitsabtastperiode vor der laufenden Abtastperiode gesetzt war, die nachfolgend die vorhergehende Abtastperiode genannt wird, und

eine Einrichtung (72) zum Multiplizieren des Helligkeits-Verhältnissignals der laufenden Abtastperiode mit dem letzten Rad-Steuersignal, um ein neues Rad-Steuersignal zu erzeugen, das einem Sollwertsignal entspricht, auf das die den mittleren Strom einstellende Einrichtung anspricht, um zu bewirken, daß das Helligkeits-Verhältnissignal im wesentlichen gleich 1 ist;

eine Einrichtung (73) zum Subtrahieren des letzten Rad-Steuersignals von dem neuen Rad-Steuersignal, um ein Differenzsignal zu erzeugen zum Erzeugen des Rad-Steuersignals, um der Einrichtung zum Einstellen des Röntgenröhren-Strommittelwertes den Befehl zu geben, den mittleren Strom zu verändern, der zwischen der Anode und der Kathode der Röhre fließt;

eine Schleife, die nachfolgend Hochspannungs- bzw. kV-Schleife genannt wird, zum Ermitteln des Anteils des Helligkeitsfehlers, der durch Einstellen der an die Röntgenröhrenanode angelegten Hochspannung korrigiert werden muß, wobei die kV-Schleife enthält:

eine Einrichtung (80) zum Bilden des Verhältnisses des letzten Rad-Steuersignals und eines gewählten Rad-Steuersignals, das einem vorbestimmten Leitungsintervall für die Röntgenröhre während jeder Helligkeits-Abtastperiode und somit dem gewünschten mittleren Röntgenröhrenstrom entspricht, wobei das Signal, das aus der Bildung des Verhältnisses der letzten Rad-Steuer- und gewählten Rad-Steuersignale entsteht, nachfolgend als das Rad-Steuer-Verhältnissignal bezeichnet wird;

eine Einrichtung (83) zum Multiplizieren des Rad-Steuer-Verhältnissignals mit dem Helligkeits-Verhältnissignal zum Erzeugen eines kV-Steuerverhältnissignals, das dem entspricht, wieviel kV Einstellung erforderlich ist, um die Helligkeit zu korrigieren, wenn das vorausgesagte Rad-Steuersignal der primären Schleife gleich einem Wert ist, der sich von dem gewählten Rad-Steuersignal unterscheidet, das dem Helligkeitsfehler entspricht, der entstehen würde, wenn das Rad-Steuersignal gezwungen wäre, gleich dem gewählten Rad-Steuersignal zu sein;

eine Einrichtung (85) zum Speichern eines Sollwertsignals, das nachfolgend letztes kV-Steuersignal (86) genannt wird, das dem Wert entspricht, auf den die Hochspannung der Röntgenröhre durch ein kV-Steuersignal (62) während der vorhergehenden Abtastperiode gesetzt war;

eine Einrichtung (87) zum Umwandeln des letzten kV-Steuersignals in ein letztes Helligkeits-Faktorsignal (115), das eine normierte Helligkeit von 1 darstellt, die der minimalen verfügbaren Röhrenhochspannung entspricht;

eine Einrichtung (84, 93) zum Multiplizieren des letzten Helligkeits-Faktorsignals und des kV-Steuerverhältnissignals, um ein neues Helligkeits-Faktorsignal (89) zu erzeugen und dann das neue Helligkeits-Faktorsignal in ein neues kV-Steuersignal umzusetzen, und

eine Einrichtung (94) zum Subtrahieren des letzten kV-Steuersignals von dem neuen kV-Steuersignal, um ein Differenzsignal zum Erzeugen des kV-Steuersignals zu erzeugen, um der Einrichtung zum Steuern der Anodenspannung der Röntgenröhre den Befehl zu geben, die an die Anode der Röhre angelegte Hochspannung zu ändern.

2. Vorrichtung nach Anspruch 1 enthaltend eine Video-Verstärkungsschleife, die nachfolgend VG Schleife genannt wird, zum Ermitteln des Anteils des Helligkeitsfehlers, der durch Einstellen der Verstärkung der Video-Kamera kompensiert werden muß, wobei die VG Schleife enthält:

eine Einrichtung (112) zum Erzeugen eines Signals, das einer maximalen Grenze des Rad-Steuersignals entspricht, das nachfolgend das maximale Rad-Steuer-Grenzsignal (113) genannt wird, und eine Einrichtung (110) zum Bilden des Verhältnisses des letzten Rad-Steuersignals (A) zu dem maximalen Rad-Steuer-Grenzsignal (B), um ein erstes resultierendes Signal zu erzeugen;

eine Einrichtung (116) zum Erzeugen eines maximalen Helligkeitsfaktor-Grenzsignals, das einer maximalen Grenze des letzten Helligkeitsfaktorsignals entspricht;

eine Einrichtung (114) zum Bilden eines Verhältnisses des letzten Helligkeitsfaktorsignals (A) und des maximalen Helligkeitsfaktor-Grenzsignals (B), um ein zweites resultierendes Signal zu erzeugen;

eine erste Multipliziereinrichtung (117) zum Multiplizieren der ersten und zweiten resultierenden Signale und des Helligkeitsverhältnissignals miteinander, um ein Videoverstärkungs-Verhältnissignal (118) zu erzielen, das nachfolgend VG-Verhältnissignal genannt wird und den vorhergesagten Helligkeitsfehler darstellt, der durch Ändern der Verstärkung der Video-Kamera korrigiert werden muß, wenn sowohl das kV-Steuersignal als auch das Rad-Steuersignal ihre maximalen Grenzen erreichen würden;

eine Speichereinrichtung (125) zum Speichern eines letzten Video-Verstärkungssignals, das nachfolgend letztes VG Steuersignal genannt wird und dem Wert entspricht, auf den die die Verstärkung der Video-Kamera einstellende Einrichtung durch ein VG Steuersignal (126) während der vorhergehenden Abtastperiode gesetzt war;

eine Einrichtung (119) zum Multiplizieren des VG-Verhältnissignals und des letzten VG Steuersignals, um ein neues VG Steuersignal zu erzeugen; und

eine Einrichtung (123) zum Subtrahieren des letzten VG Steuersignals von dem neuen VG Steuersignal, um ein Differenzsignal zum Erzeugen des VG Steuersignals zu erzeugen, um der Einrichtung zum Einstellen der Verstärkung der Video-Kamera den Befehl zu geben, die Verstärkung der Video-Kamera zu ändern.

3. Vorrichtung nach Anspruch 1, wobei die kV-Steuerschleife ferner enthält:

eine Einrichtung (81) zum Erzeugen des gewählten Rad-Steuersignals und
eine Einrichtung (63) zum Verbinden des kV-Steuersignals mit der Hochspannungs-Steuereinrichtung.

4. Vorrichtung nach den Ansprüchen 2 und 3, wobei die Video-Verstärkungsschleife ferner enthält:

eine Einrichtung (124) zum Verbinden des Differenzsignals der Subtrahiereinrichtung der VG-Schleife mit einem Eingang der Speichereinrichtung der VG-Schleife zum Speichern des VG-Steuersignals;
eine Einrichtung (58) zum Verbinden des VG-Steuersignals mit der die Verstärkung der Video-Kamera einstellenden Einrichtung.

5. Vorrichtung nach einem der vorstehenden Ansprüche, wobei die Röntgenröhre eine Steuerelektrode (13) enthält und die den Strom einstellende Einrichtung aufweist:

eine Vorspannungsquelle (25), die mit der Steuerelektrode der Röntgenröhre verbunden ist, zum Anlegen einer negativen Vorspannung an die Steuerelektrode;
eine Vorspannungs-Steuereinrichtung (27), die die Funktion hat, die Quelle als Antwort auf ein Pulssteuersignal ein- und auszuschalten;
einen Pulstimer (61), der mit der Vorspannungs-Steuereinrichtung verbunden ist zum Betreiben der Vorspannungs-Steuereinrichtung, wobei der Pulstimer einen Eingang für ein Pulsbreiten-Sollwertsignal (28) hat und die Funktion hat, das Pulssteuersignal zu erzeugen, dessen Dauer variiert als Antwort auf die Größe des Pulsbreiten-Sollwertsignals;
wobei das Strahlungssteuersignal das Pulsbreiten-Sollwertsignal bildet, und eine Einrichtung (60) zum Verbinden des Signals mit dem Pulstimer.

6. Vorrichtung nach einem der vorstehenden Ansprüche, wobei die Stromeinstelleinrichtung enthält:

eine Glühwendel-Stromsteuereinrichtung (21) zum Steuern des Stroms durch die Glühwendel in der Kathode der Röntgenröhre und zum entsprechenden Steuern des entsprechenden Elektronenbündelstroms durch die Röntgenröhre als Antwort auf ein Sollwertsignal;
eine Einrichtung (51) zum Umsetzen eines Signals in ein Signal seines entsprechenden logarithmischen Wertes, wobei die Einrichtung (51) einen Eingang zum Empfangen des Rad-Steuersignals (50, 49) und einen Ausgang (51) aufweist zum Abgeben eines einen logarithmischen Wert darstellenden Signals (52);
eine Kegelfunktionsschaltung (53) mit Eingängen zum Empfangen des einen logarithmischen Wert darstellenden Signals und des kV-Steuersignals und mit einem Ausgang, wobei die Kegelfunktionsschaltung die Funktion hat, das kV-Steuersignal und das logarithmische Strahlungssteuersignal umzusetzen, um an seinem Ausgang ein erstes Sollwertsignal zu erzeugen, das auf einen Wert begrenzt ist, der das Überschreiten einer vorbestimmten Strahlungsrate für einen Körper in dem Röntgenbündel verhindert, und
eine Einrichtung (54) zum Verbinden des ersten Sollwertsignals mit der Glühwendel-Stromsteuereinrichtung zum Steuern des Glühwendelstroms.

7. Vorrichtung nach den Ansprüchen 2 und 5, enthaltend eine Aperturblendeneinrichtung (141) in der optischen Bahn zu der Video-Kamera;

einen eine einstellbare Verstärkung aufweisenden Video-Signalverstärker (145) mit einem Eingang (146) für die Video-Signale von der Video-Kamera und einem Verstärkungssteuereingang für das VG-Steuersignal und mit einem Ausgang;
eine Einrichtung (142) zum Ansteuern der Blendeneinrichtung, um die Fläche ihrer Apertur zu steuern;
eine Einrichtung (139) zum Erzeugen eines Aperturverstärkungs-Referenzsignals (147, 155), das eine im voraus eingestellte Aperturverstärkung darstellt;
einen ersten Summierverstärker (150) mit Eingängen für das VG Steuersignal (155) und für das Aperturverstärkungs-Referenzsignal (154) und mit einem Ausgang;
einen ersten Subtrahierer (153) mit einem Eingang (152), der mit dem Ausgang des ersten Summierverstärkers verbunden ist, mit einem weiteren Eingang (151) und mit einem Ausgang, der mit der Ansteuereinrichtung verbunden ist;
einen Flächen/Videoverstärkungs-Umsetzer (148), der zu dem anderen Eingang (151) des ersten Subtrahierers ein Rückführungssignal (149) rückführt, das die Fläche der Apertur der Aperturblendeneinrichtung dar-

EP 0 228 648 B1

stellt;

einen zweiten Subtrahierer (156) mit einem Eingang (157) zum Empfangen des Aperturverstärkungs-Referenzsignals (147), einem Eingang (158) zum Empfangen des Rückführungssignals und mit einem Ausgang, wobei der zweite Subtrahierer kontinuierlich ein Differenzsignal erzeugt, das sich im Verhältnis zu der Fläche der Apertur der Aperturblendeneinrichtung verändert;

einen zweiten Summierverstärker (144) mit ersten und zweiten Eingängen und mit einem Ausgang, der mit dem Verstärkungssteuereingang des Video-Signalverstärkers verbunden ist zum Verändern der elektronischen Verstärkung der Video-Kamera;

eine Einrichtung (140) zum Erzeugen eines zweiten Referenzsignals (143), das eine im voraus eingestellte elektronische Verstärkung für den Video-Signalverstärker darstellt, wobei das zweite Referenzsignal mit dem ersten Eingang des zweiten Summierverstärkers verbunden ist;

einen dritten Subtrahierer (159) mit einem Eingang (161), der das VG Steuersignal empfängt, einem Eingang (160), der das Referenzsignal des zweiten Subtrahierers empfängt, und einem Ausgang (138), der mit dem zweiten Eingang des zweiten Summierverstärkers verbunden ist; und

eine Einrichtung (35) zum Verbinden des Ausgangs des Video-Signalverstärkers mit dem Video-Monitor.

**Revendications**

1. Système fluoroscopique comprenant un tube à rayons X (10) comportant une anode (11) et une cathode (12), un moyen (21, 25, 27, 61) pour ajuster le courant moyen circulant entre l'anode et la cathode du tube pendant une séquence d'exposition aux rayons X, un moyen (23) pour régler la haute tension appliquée à l'anode du tube, un intensificateur d'image (16) servant à convertir une image de rayon X produite par un faisceau (14) de rayons X provenant du tube (16) en une image optique, une caméra vidéo (32) pour convertir ladite image optique en des signaux vidéo analogiques; un moyen (139-162) pour ajuster le gain de ladite caméra vidéo, un moniteur vidéo (36) pour transformer lesdits signaux vidéo analogiques en une image visible, et un dispositif pour régler la brillance de l'image, ledit dispositif comprenant:

un moyen (38, 32, 41, 43) pour échantillonner la brillance de l'image pendant des périodes successives et pour produire un signal de brillance représentatif de la brillance pendant une période d'échantillonnage actuelle;

un moyen pour produire un signal constant de brillance de référence;

une boucle de réglage principale comprenant un moyen (70) pour calculer le rapport entre ledit signal de brillance de référence (A) et ledit signal de brillance (B) appelé ci-après signal de rapport de brillance (82) de telle sorte qu'un rapport différent de 1 indique un écart entre le signal de brillance et le signal de brillance de référence, ladite boucle principale comprenant:

un moyen (71) pour stocker un signal de commande appelé ci-après signal de dernier réglage rad (111) correspondant au niveau auquel le courant moyen du tube à rayons X avait été commandé de se trouver par un signal de réglage rad (44) pendant la période d'échantillonnage de brillance précédant la période d'échantillonnage actuelle appelée ci-après la période d'échantillonnage précédente; et

un moyen (72) pour multiplier le signal de rapport de brillance de la période d'échantillonnage actuelle par le signal de dernier réglage rad afin de produire un nouveau signal de réglage rad correspondant à un signal de commande auquel ledit moyen d'ajustement de courant moyen réagit en faisant en sorte que ledit signal de rapport de brillance soit sensiblement égal à 1;

un moyen (73) pour soustraire ledit signal de dernier réglage rad dudit nouveau signal de réglage rad afin de produire un signal de différence destiné à produire ledit signal de réglage rad servant à commander ledit moyen d'ajustement de moyenne de courant de tube à rayons X afin de modifier le courant moyen circulant entre l'anode et la cathode du tube;

une boucle appelée ci-après boucle kV destinée à déterminer la proportion de l'écart de brillance qui nécessite d'être corrigé par ajustement de la haute tension appliquée à l'anode du tube à rayons X. ladite boucle kV comprenant:

un moyen (80) pour calculer le rapport entre ledit signal de dernier réglage rad et un signal de réglage rad sélectionné correspondant à un intervalle de conduction prédéterminé pour le tube à rayons X pendant chaque période d'échantillonnage de brillance et, de ce fait au courant moyen désiré du tube à rayons X, le signal résultant de de calcul du rapport entre les signaux de dernier réglage rad et de réglage rad sélectionné étant appelé ci-après le signal de rapport de réglage rad;

un moyen (83) pour multiplier ledit signal de rapport de réglage rad et ledit signal de rapport de brillance afin de produire un signal de rapport de réglage kV correspondant au degré d'ajustement kV qui est nécessaire pour corriger la brillance si ledit signal de réglage rad prédit par la boucle principale est égal à une valeur différente de celle du signal de réglage rad sélectionné qui correspond à l'écart de brillance qui serait obtenue si le signal de réglage rad était contraint d'être égal au signal de réglage rad sélectionné;

un moyen (85) pour stocker un signal de commande appelé ci-après signal de dernier réglage kV (86) correspondant au niveau auquel la haute tension de tube à rayons X avait été commandé de se trouver par un signal de réglage kV (62) pendant la période d'échantillonnage précédente;

un moyen (87) pour convertir ledit signal de dernier réglage kV en un signal (115) de dernier facteur de brillance représentant une brillance normalisée de 1 correspondant à la haute tension minimum de tube disponible;

un moyen (84, 93) pour multiplier ledit signal de dernier facteur de brillance et ledit signal de rapport de réglage kV afin de produire un nouveau signal (89) de facteur de brillance et pour convertir ensuite ledit nouveau signal de facteur de brillance en un nouveau signal de réglage kV, et

un moyen (94) pour soustraire ledit signal de dernier réglage kV dudit nouveau signal de réglage kV afin de produire un signal de différence destiné à produire ledit signal de réglage kV servant à commander ledit moyen destiné à régler la tension d'anode du tube à rayons X afin de modifier la haute tension appliquée à l'anode du tube.

2. Dispositif selon la revendication 1, comprenant une boucle de gain vidéo, appelée ci-après boucle VG, pour déterminer la proportion de l'écart de brillance qui nécessite d'être compensé par ajustement du gain de ladite caméra vidéo, ladite boucle VG comprenant:

un moyen (112) pour générer un signal correspondant à une limite maximale du signal de réglage rad appelé ci-après signal (113) de limite de réglage rad max et un moyen (110) pour calculer le rapport entre le signal (A) de dernier réglage rad et le signal (B) de limite de réglage rad max afin de produire un premier signal résultant;

un moyen (116) pour générer un signal de limite de facteur de brillance maximum correspondant à une limite maximum dudit signal de dernier facteur de brillance;

un moyen (114) pour calculer le rapport entre ledit signal (A) de dernier facteur de brillance et ledit signal (B) de limite de facteur de brillance maximum afin de produire un deuxième signal résultant;

un premier moyen multiplicateur (117) pour multiplier lesdits premier et deuxième signaux résultants et ledit signal de rapport de brillance afin de produire un signal (118) de rapport de gain vidéo appelé ci-après signal de rapport VG représentatif de l'écart de brillance prédit devant être corrigé par modification du gain de la caméra vidéo si le signal de réglage kV et le signal de réglage rad étaient tous deux sur le point d'atteindre leurs limites maximum;

un moyen de stockage (125) pour stocker un signal de dernier gain vidéo appelé ci-après signal de dernier réglage VG correspondant au niveau auquel le moyen d'ajustement de gain de caméra vidéo avait été commandé de se trouver par un signal de réglage VG (126) pendant la période d'échantillonnage précédente;

un moyen (119) pour multiplier ledit signal de rapport VG et ledit signal de dernier réglage VG afin de produire un nouveau signal de réglage VG; et

un moyen (123) pour soustraire ledit signal de dernier réglage VG dudit nouveau signal de réglage VG afin de produire un signal de différence destiné à produire ledit signal de réglage VG servant à commander ledit moyen d'ajustement du gain de ladite caméra vidéo afin de modifier le gain de la caméra vidéo.

3. Système selon la revendication 1, dans lequel ladite boucle de réglage kV comprend en outre:

un moyen (81) pour produire ledit signal de réglage rad sélectionné; et
un moyen (63) pour appliquer ledit signal de réglage kV audit moyen de réglage de haute tension.

4. Système selon les revendications 2 et 3, dans lequel ladite boucle de gain vidéo comprend en outre:

un moyen (124) pour appliquer ledit signal de différence dudit moyen de soustraction de ladite boucle VG à une entrée dudit moyen de stockage de ladite boucle VG afin de stocker ledit signal de réglage VG;
un moyen (58) pour appliquer ledit signal de réglage VG audit moyen d'ajustement de gain de caméra vidéo.

5. Système selon l'une quelconque des revendications précédentes, dans lequel ledit tube à rayons X comprend une électrode de commande (13) et le moyen d'ajustement de courant comprend:

une source (25) de tension de polarisation couplée à ladite électrode de commande du tube à rayons X pour appliquer une tension de polarisation négative à ladite électrode de commande;

un moyen (27) de réglage de polarisation servant à brancher et débrancher ladite source en réponse à un signal de synchronisation d'impulsions;

un dispositif (61) de chronodéclenchement d'impulsions connecté audit moyen de réglage de polarisation pour mettre en fonction ledit moyen de réglage de polarisation, ledit dispositif de chronodéclenchement d'impulsions comportant une entrée pour un signal (28) de commande de largeur d'impulsion et servant à produire ledit signal de synchronisation d'impulsions dont la durée varie en réponse à l'amplitude dudit signal de commande de largeur d'impulsion;

ledit signal de réglage de rad constituant ledit signal de commande de largeur d'impulsion, et un moyen (60) pour appliquer ledit signal audit dispositif de chronodéclenchement d'impulsions.

**6.** Système selon l'une quelconque des revendications précédentes, dans lequel le moyen d'ajustement de courant comprend:

un dispositif (21) de réglage de courant de filament pour régler le courant traversant le filament de ladite cathode de tube à rayons X et pour régler de façon correspondante le courant du faisceau d'électrons traversant ledit tube en réponse à un signal de commande;

un moyen (51) pour convertir un signal en son signal de valeur logarithmique correspondant, ledit moyen (51) comportant un moyen d'entrée destiné à recevoir ledit signal de réglage de rad (50), 49) et comportant un moyen de sortie (51) destiné à émettre un signal (52) de valeur logarithmique ;

un circuit (53) de fonction de diminution comportant un moyen d'entrée pour recevoir ledit signal de valeur logarithmique et ledit signal de réglage kV et comportant un moyen de sortie, ledit circuit de fonction de diminution servant à convertir ledit signal de réglage kV et ledit signal logarithmique de réglage de rad afin de produire sur son moyen de sortie un premier signal de commande qui est limité à une valeur qui empêche que soit dépasse un taux de d'irradiation prédéterminé pour un corps se trouvant dans le faisceau de rayons X, et

un moyen (54) couplant ledit premier signal de commande audit dispositif de réglage de courant de filament pour régler ledit courant de filament.

**7.** Système selon les revendications 2 et 5 comprenant un moyen (141) formant obturateur d'ouverture dans le trajet optique allant jusqu'à ladite caméra vidéo;

un amplificateur de signal vidéo à gain variable (145) comportant une entrée (146) pour lesdits signaux vidéo provenant de ladite caméra vidéo et une entrée de réglage de gain pour ledit signal de réglage VG et comportant une sortie;

un moyen (142) pour entraîner ledit moyen formant obturateur de manière à régler la superficie de son ouverture;

un moyen (139) pour générer un signal de référence (147, 155) de gain d'ouverture représentatif d'un gain d'ouverture préréglé;

un premier amplificateur de sommation (150) comportant un moyen d'entrée pour ledit signal de réglage VG (155) et pour ledit signal (154) de référence de gain d'ouverture et comportant une sortie;

un premier soustracteur (153) comportant une entrée (152) couplée à ladite sortie du premier amplificateur de sommation, comportant une autre entrée (151) et une sortie couplée audit moyen d'entraînement;

un convertisseur (148) de superficie-gain vidéo servant à envoyer en rétroaction vers ladite autre entrée (151) du premier soustracteur un signal (149) de rétroaction représentatif de la superficie de l'ouverture dudit moyen formant obturateur d'ouverture;

un deuxième soustracteur (156) comportant une entrée (157) destinée à recevoir ledit signal de référence (147) de gain d'ouverture, une entrée (158) destinée à recevoir ledit signal de rétroaction et une sortie, ledit deuxième soustracteur produisant continuellement un signal de différence qui varie en proportion de la superficie de l'ouverture dudit moyen format obturateur d'ouverture;

un deuxième amplificateur de sommation (144) comportant des premier et deuxième moyens d'entrée et comportant une sortie couplée à ladite entrée de réglage de gain dudit amplificateur de signal vidéo pour faire varier le gain électronique de ladite caméra vidéo;

un moyen (140) pour générer un deuxième signal de référence (143) représentatif d'un gain électronique préréglé pour ledit amplificateur de signal vidéo, ledit deuxième signal de référence étant couplé audit premier moyen d'entrée dudit deuxième amplificateur de sommation;

un troisième soustracteur (159) comportant une entrée (161) recevant ledit signal de réglage VG et une entrée (160) recevant le signal de différence dudit deuxième soustracteur et comportant une sortie (138) couplée audit deuxième moyen d'entrée dudit deuxième amplificateur de sommation; et

un moyen (35) pour coupler ladite sortie dudit amplificateur de signal vidéo audit moniteur vidéo.

FIG. 1

EP 0 228 648 B1

FIG 2

FIG. 3

FIG. 5

FIG. 4